# EUROPEAN PATENT APPLICATION

(11) **EP 0 653 747 A1**
(43) Date of publication of application: **17.05.1995**
(21) Application number: 94117985.5
(22) Date of filing: 15.11.1994
(51) Int. Cl.: G11B 5/66, G11B 5/85

(54) **Magnetic recording medium and manufacturing method thereof**

(30) Priority: 17.11.1993 JP 287947/93
(71) Applicant: MATSUSHITA ELECTRIC INDUSTRIAL CO., LTD., Kadoma-shi Osaka (JP)
(72) Inventor: Sugita, Ryuji, Hirakata-shi, Osaka, 573 (JP); Tohma, Kiyokazu, Hirakata-shi, Osaka, 573 (JP); Ishida, Tatsuaki, Sakai-shi, Osaka, 591 (JP); Yoshimoto, Kazunari, Sakyo-Ku, Kyoto-Shi, Kyoto, 606 (JP)
(74) Representative: Eisenführ, Speiser & Partner

(57) **Abstract**

In a magnetic recording medium, a first Co-based magnetic layer 12 including oxygen is formed on a substrate 11, and the layer 12 has an easy axis of magnetization inclined with respect to a film normal 14. Further, a second Co-based magnetic layer 13 including oxygen is formed on the first layer, and the second layer 13 has an easy axis of magnetization inclined with respect to the film normal. It is a feature that a dispersion of c-axis of a hexagonal close packed structure in the first magnetic layer 12 is larger than that of a hexagonal close packed structure in the second magnetic layer 13.

## Description

### BACKGROUND OF THE INVENTION

### Field of the Invention

The present invention relates to a magnetic recording medium having a high S/N ratio and a manufacturing method thereof.

### Description of the Prior Art

A magnetic recording medium has been developed to cope with a higher recording density, and a magnetic recording medium superior in read/write characteristics at short wavelengths is needed. At present, magnetic recording media used mainly are prepared by coating magnetic powders to a substrate, and characteristics of the magnetic media are improved to satisfy the above-mentioned need. However, the improvement comes near limits.

A thin film magnetic recording medium is developed to exceed the limits. A thin film magnetic recording medium is prepared by vacuum deposition, sputtering, plating or the like, and it has superior read/write characteristics at short wavelengths. Materials such as Co, Co-Ni, Co-Ni-P, Co-O, Co-Ni-O, Co-Cr, Co-Ni-Cr and the like are tried for a magnetic layer in a thin film magnetic recording medium. A thin film magnetic tape including a deposited magnetic layer made of Co-Ni-O is already available commercially as a Hi-8 deposition tape for a video cassette recorder.

A thin film magnetic tape is manufactured for example with oblique deposition on a substrate. A thin film manufactured with oblique deposition has an easy axis of magnetization oblique to a film normal of the tape. That is, the easy axis of magnetization does not exist in a film plane or along the film normal, but along a direction oblique relative to the film normal. For example, the easy axis of magnetization is oblique by 70° relative to the film normal in a plane including a longitudinal direction of the tape in the commercial Hi-8 deposition tape. The longitudinal direction means a length direction of a tape.

A thin film magnetic recording medium having two magnetic layers deposited successively is already produced, and if the 2-layer medium is compared with a magnetic recording layer of a single layer, noise decreases by 2 dB for the same output signal.

It is demanded that a magnetic recording medium has been developed to have a more compact size and to deal with a higher linear recording density. In order to satisfy these requirements, a line recording density and a track density have to be improved. Therefore, a higher S/N ratio, especially at short wavelength region, is desirable for a magnetic tape.

### SUMMARY OF THE INVENTION

An object of the present invention is to provide an imaging device which solves these problems.

In one aspect of the invention, a magnetic recording medium comprises a substrate, a first magnetic layer formed on the substrate, and a second magnetic layer formed on the first magnetic layer, wherein the first and second magnetic layers are made of Co-based materials including oxygen. Each of the two magnetic layers has an easy axis of magnetization inclined with respect to a film normal. A dispersion of c-axis of a hexagonal close packed structure of columnar crystal grains in the first magnetic layer is larger than that in the second magnetic layer. Preferably, an oxygen concentration in the first and second magnetic layers is between 6 and 35 at%. Preferably, a thickness of each of the first and second magnetic layers is 0.1 µm or less. Preferably, an inclination angle of columnar grains relative to the film normal in each of the magnetic layers is 30° or more over the whole magnetic layers.

In another aspect of the invention, in a method of manufacturing a magnetic recording medium, a Co-based first magnetic layer including oxygen is formed on a running substrate by depositing evaporated atoms in vacuum obliquely in an environment including oxygen. Then, a Co-based second magnetic layer including oxygen is formed on the first magnetic layer by depositing evaporated atoms under oxygen environment obliquely so that a dispersion of c-axis of a hexagonal close packed structure of crystal grains in the first magnetic layer is larger than that in the second magnetic layer. Preferably, when the second magnetic layer is formed, a ratio of a number of deposited atoms of the magnetic layer to impurity molecules is larger than that when the first magnetic layer is formed. Preferably, when the second magnetic layer is formed, an average deposition rate on the first magnetic layer is larger than that on the running substrate when the first magnetic layer is formed. Preferably, a number of water molecules when the second magnetic layer is formed is smaller than that when the first magnetic layer is formed. Preferably, at an incident angle of evaporated atoms onto the substrate when the first magnetic layer is formed is larger than that when the second magnetic layer is formed.

An advantage of a magnetic recording medium of the present invention is that a magnetic recording medium having a high S/N ratio can be provided.

An advantage of a method of manufacturing a magnetic recording medium of the present invention is that a magnetic recording medium having a high S/N ratio can be produced.

### BRIEF DESCRIPTION OF THE DRAWINGS

These and other objects and features of the present invention will become clear from the following description taken in conjunction with the preferred embodiments thereof with reference to the accompanying drawings, and in which:
Fig. 1 is a diagram of a basic structure of a magnetic recording medium of the invention;
Fig. 2 is a flowchart of a manufacturing method of a magnetic recording medium;
Fig. 3 is a schematic diagram of an inside of a vacuum deposition apparatus for manufacturing methods of a magnetic recording medium; and
Fig. 4 is a schematic diagram of an example of an electron diffraction pattern.

### DETAILED DESCRIPTION OF THE PREFERRED EMBODIMENTS

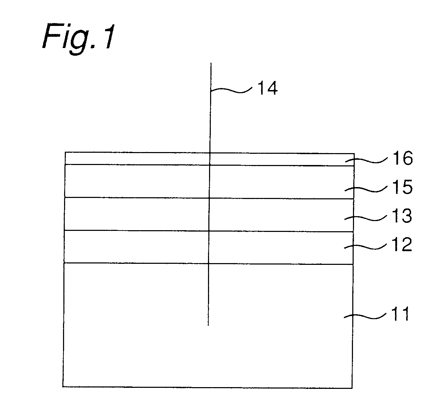

Referring now to the drawings, wherein like reference characters designate like or corresponding parts throughout the several views, embodiments of the invention are explained below. Fig. 1 shows a magnetic recording medium according to the invention. In the magnetic recording medium, a first Co-based magnetic layer 12 including oxygen is formed on a substrate 11. The magnetic layer 12 has an easy axis of magnetization inclined with respect to a film normal 14. Further, a second Co-based magnetic layer 13 including oxygen is formed on the first layer 12. The second magnetic layer 13 has an easy axis of magnetization inclined with respect to the film normal. Each of the first and second magnetic layers 12 and 13 is manufactured with oblique vacuum deposition and it consists of columnar crystal grains grown along c axis which coincides an easy axis of magnetization. Preferably, a protection layer 15 and a lubricant layer 16 is formed successively on the second magnetic layer 13.

It is a feature of the magnetic recording medium that a dispersion of c-axis of a hexagonal close packed structure of columnar grains in the first magnetic layer 12 is larger than that of a hexagonal close packed structure in the second one 13.

It is needed that the columnar crystal grains in the first and second magnetic layers are inclined by 30° or more relative to the film normal over a whole film thickness. Otherwise the c-axis of the hexagonal close packed structure in the grains are aligned almost randomly in a magnetic layer, so that it becomes difficult to control the dispersion of the c-axis.

Preferably, an average oxygen concentration in each of the first and second magnetic layers is set between 6 and 35 at%. If the oxygen concentration is lower than 6 at%, an S/N ratio of an output signal of the magnetic recording medium is low because a coercive force cannot become high. Further, if the oxygen concentration is higher than 35 at%, a saturation magnetization is too low to generate a high output signal.

Further, if a film thickness of each of the first and second magnetic layers is larger than 0.1 µm, noise becomes too high to obtain a high S/N ratio. Therefore, a film thickness of each of the layers is set to be 0.1 µm or less.

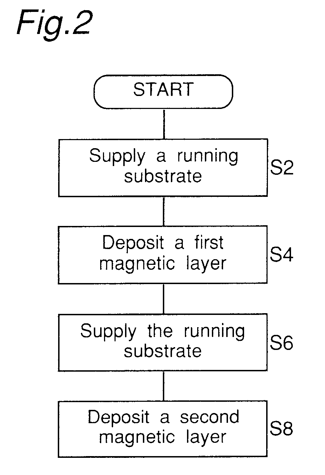

Fig. 2 shows a flow of manufacturing method of a magnetic recording medium. First, a running substrate is supplied (step S2). Next, a first magnetic layer is formed on the running substrate with oblique vacuum deposition (step S4). Then, the running substrate on which the first magnetic layer has been formed is provided (step S6), and a second magnetic layer is formed with oblique vacuum deposition on the running substrate (step S8).

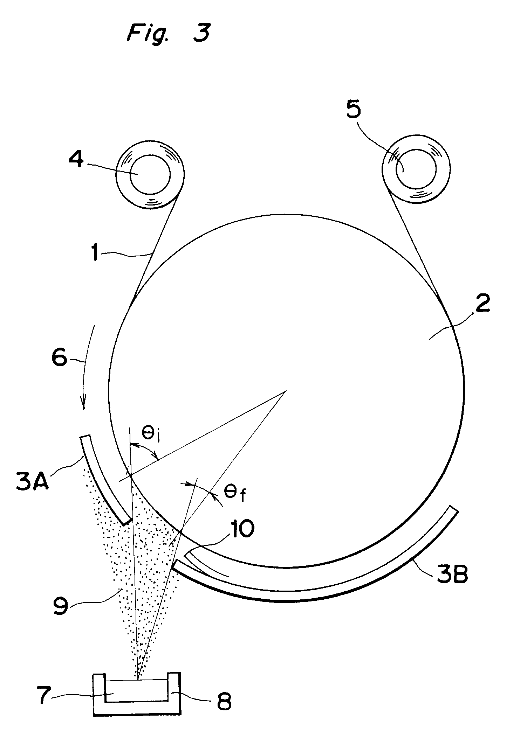

Fig. 3 shows an example of a structure inside a vacuum deposition apparatus for manufacturing a magnetic recording medium comprising Co-O films. A vacuum chamber, a gas supply system and an evacuation system are not shown. When a first magnetic layer 12 is grown, a polymer film 1 (or a substrate 11) is run along a direction shown by an arrow 6, along a surface of a cylindrical drum 2. Reference numerals 4 and 5 denote a supply roll and a winding roll for the polymer film 1. The shielding plates 3A and 3B are arranged between the evaporation source 8 and the cylindrical drum 2 to prevent for unnecessary evaporated atoms to adhere the substrate. An electron beam evaporation source is preferable for the evaporation source 8, and a metal having a high melting point, for example cobalt, is filled therein as an evaporation material 7. The electron beam evaporation source is used in order to evaporate the material having a high melting point at a high evaporation rate. Reference numeral 10 denotes an inlet for introducing oxygen in the vacuum chamber on deposition.

Evaporated atoms 9 from the evaporation source 8 adhere to the polymer film 1 through an aperture between the shielding plates 3A, 3B to form a first magnetic layer 12 in an environment including oxygen. Oxygen is introduced into a vacuum chamber through the inlet 10. In the vacuum deposition, as shown in Fig. 3, an incident angle of evaporated atoms 9 changes continuously from an incident angle ϑᵢ at a start position of film growth to an incident angle ϑ_{f} at an end position of film growth. The incident angle of evaporated atoms 9 is defined as an angle of average incident direction of evaporated atoms measured relative to a film normal. Incident angles of evaporated atoms to a start point and an end point of film growth when the first magnetic layer 12 is formed are denoted as ϑᵢ₁ and ϑ_{f1}.

A Co-O first magnetic layer 12 deposited as explained above has an easy axis of magnetisation oblique to the film normal. That is, the easy axis of magnetization does not exist in a film plane or along the film normal, but along a direction oblique relative to the film normal.

The polymer film 1 on which the first magnetic layer 12 has been formed to be wound on the winding roll 5 is run in a reverse direction of the arrow 6 to rewind on the supply roll 4, while the electric power source for the evaporation source is turned off to stop evaporation. Alternatively, the aperture between the shielding plates 3A and 3B are closed by a shutter (not shown) so as to prevent adhesion of evaporated atoms 9 onto the polymer film 1.

Next, the polymer film 1 is run along a direction of the arrow 6 to form a second magnetic layer 13 on the first magnetic layer 12. Incident angles of evaporated atoms to a start point and an end point of film growth when the second magnetic layer is formed are denoted as ϑᵢ₂ and ϑ_{f2}. Cobalt is filled in the evaporation source 8. Oxygen is introduced into the vacuum chamber through the inlet 10. The Co-O second magnetic layer 13 deposited as explained above has an easy axis of magnetization oblique to the film normal.

The first and second magnetic layers 12, 13 formed as explained above exist generally in a state including metallic portions of hexagonal close packed structure mixed with oxide portions of NaCl structure. This can be confirmed by an transmission electron diffraction analysis. That is, after a magnetic layer is formed on a substrate, the substrate is removed, and electrons are transmitted normally through a film plane of the magnetic layer. Thus, diffraction patterns of hexagonal close packed and NaCl structures are observed.

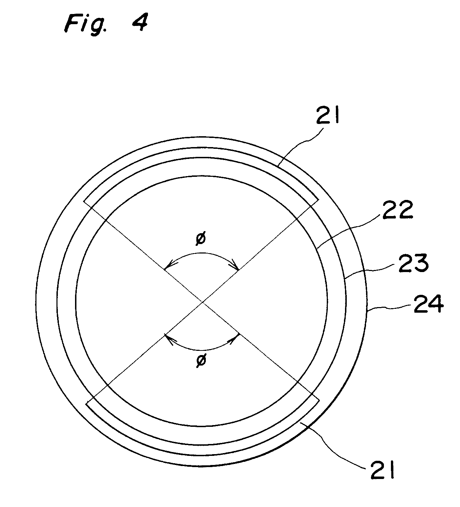

Fig. 4 shows a schematic diagram of an example of a transmission electron diffraction pattern. It is to be noted that black and white in Fig. 4 are opposite to an ordinary transmission electron diffraction photograph wherein background is black while portions irradiated by diffracted electrons become white.

Arcs 15 shown in Fig. 4 denote diffraction patterns due to c plane of Co. The dispersion of c axis in the magnetic layer can be determined quantitatively by an observed angle φ of the diffraction pattern 21 viewed from the center of diffraction patterns. Other diffraction patterns are also observed. A diffraction pattern 22 is generated by (111) plane of the oxide of NaCl structure, a diffraction pattern 23 is generated by (100) plane of the metal of hexagonal close packed structure and (200) plane of the oxide of NaCl structure, and a diffraction pattern 24 is generated by (101) plane of the metal.

The dispersion of c axis can be determined by observing the diffraction patterns 21 from c axis of the hexagonal close packed structure. If the diffraction pattern 21 has a uniform ring, c axis of columnar grains do not align in the film plane at all, and the dispersion is maximum. If the dispersion of c axis becomes smaller in the magnetic layer, the diffraction pattern 21 does not form a uniform ring, and a bright and dark pattern of a period of 180° can be observed, as shown in Fig. 4. The dispersion of c axis becomes smaller as the width of bright portions along a circumferential direction becomes narrower in an ordinary transmission electron diffraction photograph.

Transmission electron diffraction patterns are shown schematically in Fig. 4 wherein the diffraction pattern 21 becomes evident uniformly in the range of angle φ while it vanishes completely outside the angle φ. Actually, a brightness around a center of the pattern 21 in the range of φ becomes most bright, while the pattern becomes less prominent as the position moves from the center and does not become obvious outside the range of φ actually. The range of φ shown in Fig. 4 is defined as a half width of a peak of brightness in the actual transmission electron diffraction pattern. If φ is near 0° or the patterns tend to be reduced to two spots, the dispersion of c axis is very small, and c axis align almost along one direction. As the dispersion of c axis in the magnetic layer increases, φ increases. When the diffraction pattern looks as a uniform ring, φ becomes 180° and the columnar grains align randomly with respect to c axis.

The inventors investigate a relation of the dispersion of c axis of hexagonal close packed structure in the magnetic layer to an S/N ratio in detail, and they find that a higher S/N ratio can be obtained if a dispersion of c axis of hexagonal close packed structure in crystal grains in the first magnetic layer 12 is larger than that in the second magnetic layer 13.

There are various methods to make the dispersion of c axis of hexagonal close packed structure in crystal grains in the first magnetic layer 12 larger than that in the second magnetic layer 13, and they are not limited to methods explained below. Various methods can be adopted by finding appropriate conditions to fabricate a magnetic recording medium of the invention by taking into account a known condition that crystallographic orientation is affected by a surface state of the substrate or a substrate temperature when a film is deposited.

In a method, an average deposition rate the first magnetic layer 12 is formed is lower than that when the second magnetic layer 13 is formed. Generally a ratio of a number of evaporated atoms to a number of remaining gas around a region where a magnetic layer is formed increases with increasing deposition rate, so as to improve crystallographic orientation. Thus, the ratio is increased when the second magnetic layer 13 is formed. The above-mentioned increase in average deposition rate corresponds to an increase in the ratio of a number of evaporated atoms to a number of remaining gas.

In a different method, a number of water molecules around the region where the magnetic layer is formed when the second magnetic layer 13 is formed is smaller than when the first magnetic layer 12 is formed. This also corresponds to an increase in the above-mentioned ratio. Water vapor may be introduced, for example, by supplying water vapor in a water bottle through a pipe and a flow controller into the vacuum chamber of the deposition apparatus.

In a further method, the second magnetic layer 13 is formed with an incident angle of evaporated atoms 9 to the substrate smaller than that when the first magnetic layer 12 is formed under the above-mentioned conditions. In order to form the second magnetic layer 13 with an incident angle of evaporated atoms 9 to the substrate smaller than that when the first magnetic layer 12 is formed, when a vacuum deposition apparatus shown in Fig. 3 is used, the shielding plates 3A and 3B are set so as to satisfy relations ϑᵢ₁ > ϑᵢ₂ and ϑ_{f1} ≧ ϑ_{f2}, or ϑᵢ₁ ≧ ϑᵢ₂ and ϑ_{f1} > ϑ_{f2} wherein ϑᵢ₁ and ϑ_{f1} denote incident angles of evaporated atoms to a start point and an end point in a region where a film is grown when the first magnetic layer 12 is formed and ϑᵢ₂ and ϑ_{f2} denote incident angles of evaporated atoms to a start point and an end point when the second magnetic layer 13 is formed.

Next, a relation is explained of the dispersion of c axis of hexagonal close packed structure in the first and second magnetic layers 12, 13 to read/write characteristics. The dispersion of c axis of hexagonal close packed structure in the first and second magnetic layers 12, 13 is denoted here as φ.

Table 1 summarizes output and noise of four examples. In an example of the invention, φ in the first magnetic layer 12 is 150°, while that in the second magnetic layer 13 is 80°. The dispersion of c-axis of hexagonal close packed structure in the first magnetic layer 12 is larger than that of the second magnetic layer 13. In a first comparison example, φ in the first magnetic layer 12 is 80°, while that in the second magnetic layer 13 is 150°. The dispersion of c-axis of hexagonal close packed structure in the first magnetic layer 12 is smaller than that in the second magnetic layer 13. In a second comparison example, φs of 80° in the first magnetic layers 12 and 13 are equal to each other, while in a third comparison example, φs of 150° in the first magnetic layers 12 and 13 are equal to each other.

**Table 1**

| Characteristics of four samples of magnetic recording media | | | | |
|---|---|---|---|---|
| Sample | φ₁ (°) | φ₂ (°) | Output (dB) | Noise (dB) |
| Example 1 (Invention) | 150 | 80 | 0 | 0 |
| Comparison Example 1 | 80 | 150 | -1 | +1 |
| Comparison Example 2 | 80 | 80 | 0 | +1 |
| Comparison Example 3 | 150 | 150 | -1 | 0 |

Magnetic recording media having the above-mentioned characteristics are manufactured by changing the incident angles, the number of water molecules in the environment or the like. When read/write characteristics are measured, a carbon protection film of thickness of 10 nm and a lubricant layer of film thickness of 3 nm are formed on a surface of a magnetic recording medium. The output represents a value when a signal of wavelength of 0.5 µm is written and read, while the noise represents a value at a frequency in correspondence to wavelength of 0.6 µm when a signal of wavelength of 0.5 µm is written and read. It is to be noted that the values shown in Table 1 are relative values to the values of the example of the invention as 0 dB.

The output of the example of the invention larger than the first comparison example is ascribable to a higher crystallographic orientation of the second magnetic layer 13 located near the magnetic head. Thus, the magnetic field of the head can be used effectively in write operation. The noise of the first comparison example is larger than the example of the invention, and a reason of this effect is not clear though it is guessed to be ascribed to a higher crystallographic orientation of the first magnetic layer 12.

The output of the second comparison example is equal to that of the example of the invention because the crystal alignment of the second magnetic layer 13 in the second comparison example is equal to that in the example of the invention. The noise of the second comparison example is larger by 1 dB than the example of the invention, and a reason of this effect is not clear though it is guessed to be ascribed to a better crystallographic orientation of the first magnetic layer 12, similarly to the first comparison example.

The output of the third comparison example is low because the crystallographic orientation of the second magnetic layer 13 is worse.

As explained above, the example of a magnetic recording medium of the invention has the highest S/N ratio among the four Co-based two-layer magnetic recording media including oxygen obtained by oblique deposition.

Next, examples of a manufacturing process of a magnetic recording medium are explained in detail. In an example, in the vacuum deposition apparatus shown in Fig. 3, a first magnetic layer 12 is formed on a polyethylene telephthalate film as a substrate 11. Co is used as an evaporation material 7. The surface temperature of the cylindrical drum 2 is set to be room temperature. Incident angle ϑᵢ₁ is set as 85°, while ϑ_{f1} is set as 60°. An oxygen amount introduced from the inlet 10 is 0.8 l/min. Then, the first magnetic layer 12 of film thickness of 0.05 µm is formed at an average deposition rate of 0.2 µm/s through an aperture between the shielding plates 3A and 3B under oxygen environment.

The polyethylene telephthalate film on which the first magnetic layer 12 is formed is wound on the winding roll 5. Next, the film is wound back on the supply roll 4 while the aperture between the shielding plates 3A, 3B is closed by the shutter (not shown).

Next, a second magnetic layer 13 is formed. The Co used when the first magnetic layer 12 is formed is used further as the evaporation material 7. The surface temperature of the cylindrical drum 2 is set to be room temperature. Incident angle ϑᵢ₂ is set as 80°, while ϑ_{f2} is set as 55°. An oxygen amount introduced from the inlet 10 is 0.8 l/min. Then, the second magnetic layer 13 of film thickness of 0.05 µm is formed at an average deposition rate of 0.3 µm/s. The first magnetic layer 12 produced as explained above has φ of 140° larger than φ of 70° of the second magnetic layer 13.

Next, a different example is explained. In the vacuum deposition apparatus shown in Fig. 3, a first magnetic layer 12 is formed on a polyethylene telephthalate film as a substrate. Co is used as an evaporation material 7. The surface temperature of the cylindrical drum 2 is set to be room temperature. ϑᵢ₁ is set as 80°, while ϑ_{f1} is set as 60°. An oxygen amount of 0.8 l/min is introduced from the inlet 10, while a water vapor of 0.2 l/min is also introduced from the inlet 10. Then, the first magnetic layer 12 of film thickness of 0.05 µm is formed at an average deposition rate of 0.3 µm/s under oxygen environment.

The polyethylene telephthalate film on which the first magnetic layer 12 is formed is wound on the winding roll 5. Next, the film is wound back on the supply roll 4 while an aperture between the shielding plates 3A and 3B is closed by the shutter (not shown).

Next, a second magnetic layer 13 is formed. The Co used when the first magnetic layer 12 is formed is used further as the evaporation material 7. The surface temperature of the cylindrical drum 2 is set to be room temperature. ϑᵢ₂ is set as 80°, while ϑ_{f2} is set as 60°. An oxygen amount introduced from the inlet 10 is 0.8 l/min. Then, the second magnetic layer 13 of film thickness of 0.05 µm is formed at an average deposition rate of 0.3 µm/s. The first magnetic layer 12 produced as explained above has φ of 140° larger than that of 80° of the second magnetic layer 13.

The magnetic recording media manufactured as explained above are slitted into tapes, and read/write characteristics thereof are evaluated with a ring type magnetic head of gap length of 0.18 µm made of Sendust. When the read/write characteristics are measured, a carbon protection film of thickness of 10 nm and a lubricant of film thickness of 3 nm are formed on a surface of a medium. The measured output is high by 2 dB at 5 µm of recorded wavelength, by 7 dB at 0.5 µm and by 8 dB at 0.4 µm and noises of both tapes are lower by about 1 dB over the entire wavelength band if compared with the commercial Hi-8 deposition tape for a video cassette recorder. As explained above, magnetic tapes of the invention have a much higher S/N ration than the prior art deposition tape.

In the above-mentioned embodiments, Co-O is used as a composition of the magnetic layers. However, other compositions such as Co-Ni-O, Co-Fe-O and Co-Ni-Fe-O may also be used for the invention to produce a high S/N ratio. A high S/N ratio can be attained by making a dispersion of c-axis of a hexagonal close packed structure in the first magnetic layer 12 to be larger than that of a hexagonal close packed structure in the second magnetic layer 13, under other manufacturing conditions, manufacturing processes and values of φ. As a material of the substrate, the polyethylene telephthalate film is used in the above-mentioned embodiments. However, a polymer film such as polyethylene naphthalate film, polyimide film, polyamide film or polyether imide film may also be used similarly.

In the above-mentioned embodiments, the first magnetic layer is formed directly on a polymer film. However, an underlayer may be formed on the polymer film before the first magnetic layer is formed. A nonmagnetic intermediate layer may be formed between the two magnetic layers, so that the second magnetic layer is not formed directly on the first one.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A magnetic recording medium comprising:
a substrate;
a first magnetic layer made of Co-based material including oxygen, which first magnetic layer being formed on the substrate, which first magnetic layer having an easy axis of magnetization inclined with respect to a film normal; and
a second magnetic layer made of Co-based material including oxygen, which second magnetic layer being formed on the first magnetic layer, which second magnetic layer having an easy axis of magnetization inclined with respect to the film normal;
wherein a dispersion of c-axis of a hexagonal close packed structure of crystal grains in the first magnetic layer is larger than that in the second magnetic layer.

2. The magnetic recording medium according to Claim 1, wherein an oxygen concentration in the first and second magnetic layers is between 6 and 35 at%.

3. The magnetic recording medium according to Claim 2, wherein a thickness of each of the first and second magnetic layers is 0.1 µm or less.

4. The magnetic recording medium according to Claim 1, wherein a thickness of each of the first and second magnetic layers is 0.1 µm or less.

5. The magnetic recording medium according to Claim 1, wherein an inclination angle of columnar grains with respect to the film normal in each of the magnetic layers is 30° or more over the whole magnetic layers .

6. The magnetic recording medium according to Claim 2, wherein an inclination angle of columnar grains with respect to the film normal in each of the magnetic layers is 30° or more over the whole magnetic layers.

7. A method of manufacturing a magnetic recording medium comprising the steps of:
providing a substrate running along a direction;
forming a Co-based first magnetic layer including oxygen by depositing evaporated atoms obliquely on the substrate under oxygen environment;
providing a substrate running along a direction, on which substrate the first magnetic layer has been formed; and
forming a Co-based second magnetic layer including oxygen by depositing evaporated atoms obliquely on the first magnetic layer under oxygen environment so that a dispersion of c-axis of a hexagonal close packed structure in crystal grains in the first magnetic layer is larger than that in the second magnetic layer.

8. The method according to Claim 7, wherein the dispersion of c-axis is determined by using a transmission electron diffraction pattern of the first and second magnetic layers.

9. The method according to Claim 7, wherein in said step of forming the second magnetic layer, a ratio of a number of deposited atoms of the magnetic layer to impurity molecules is larger than that when the first magnetic layer is formed.

10. The method according to Claim 7, wherein in said step of forming the second magnetic layer, an average deposition rate when the second magnetic layer is formed on the first magnetic layer is larger than that when the first magnetic layer is formed on the running substrate.

11. The method according to Claim 7, wherein in said step of forming the second magnetic layer, a number of water molecules is smaller than that when the first magnetic layer is formed.

12. The method according to Claim 10, wherein an incident angle of evaporated atoms onto the substrate when the first magnetic layer is formed is larger than that when the second magnetic layer is formed.

13. The method according to Claim 11, wherein an incident angle of evaporated atoms onto the substrate when the first magnetic layer is formed is larger than that when the second magnetic layer is formed.
